Europäisches Patentamt

European Patent Office

Office européen des brevets

(19)

(11) Veröffentlichungsnummer: **0 046 972**
**B1**

(12) **EUROPÄISCHE PATENTSCHRIFT**

(45) Veröffentlichungstag der Patentschrift:
02.04.86

(51) Int. Cl.⁴: **F 24 D 3/12**

(21) Anmeldenummer: **81106589.5**

(22) Anmeldetag: **25.08.81**

(54) **Plattenförmiges Heizelement.**

(30) Priorität: **29.08.80 DE 3032694**

(43) Veröffentlichungstag der Anmeldung:
**10.03.82 Patentblatt 82/10**

(45) Bekanntmachung des Hinweises auf die Patenterteilung:
**02.04.86 Patentblatt 86/14**

(84) Benannte Vertragsstaaten:
**AT BE CH FR GB IT LI NL**

(56) Entgegenhaltungen:
**DE - A - 1 966 975**
**DE - A - 2 431 019**
**DE - A - 2 714 901**
**DE - A - 2 717 240**
**DE - A - 2 804 231**
**DE - A - 2 941 806**
**FR - A - 1 029 954**
**GB - A - 2 045 423**
**US - A - 4 145 852**

(73) Patentinhaber: **ZUGLA AG, Hauptstrasse 34,
CH-8750 Glarus (CH)**

(72) Erfinder: **Haugeneder, Hans, Oberer Markt 8,
A-3335 Weyer (AT)**

(74) Vertreter: **Skuhra, Udo, Dipl.-Ing., Reinhard, Skuhra,
Weise Patentanwälte Leopoldstrasse 51,
D-8000 München 40 (DE)**

## Beschreibung

Die Erfindung betrifft ein plattenförmiges Heizelement gemäss dem Oberbegriff des Patentanspruchs 1.

Ein plattenförmiges Heizelement entsprechend dem Oberbegriff des Patentanspruchs 1 ist aus der DE-A-2 717 240 bekannt. Bei diesem plattenförmigen Heizelement sind in dem Heizelement verteilt und im wesentlichen parallel zueinander liegende Rohre oder Schläuche ausgebildet oder durch Aussparungen ebenfalls im wesentlichen parallel zueinander liegende Kanäle vorgesehen, die eine gerichtete Strömung mit vergleichbar grossen Zwischenräumen zwischen den Rohren oder Kanälen festlegen und keine flächige Durchströmung des Heizelementes ermöglichen.

Der Erfindung liegt demgegenüber die Aufgabe zugrunde, ein Heizelement der eingangs genannten Art derart auszubilden, dass bei einer flächigen Durchströmung des Heizelementes eine einfache Verlegung möglich ist und das Heizelement lastendruckbeständig ist.

Diese Aufgabe wird erfindungsgemäss durch den kennzeichnenden Teil des Patentanspruchs 1 gelöst.

Weitere Ausgestaltungen ergeben sich aus den Unteransprüchen.

Das Heizelement weist zwei weitgehend flexible Platten auf, von denen wenigstens eine Platte mit abstehenden Abstandselementen versehen ist, so dass beim Zusammenfügen der beiden Platten die Abstandselemente den vom Heizmedium durchflossenen Hohlraum festlegen. Durch die diesen Hohlraum bestimmenden Abstandselemente ist eine flächige Durchströmung des Heizelementes sichergestellt. Die Abstandselemente zwischen den beiden Platten ermöglichen eine hohe Belastung derartiger Heizelemente bei gleichzeitiger Gewährleistung eines freien Durchflusses des Hohlraumes zur Führung des Heizmediums.

Das Heizelement lässt sich in jeder beliebigen Grösse fertigen, beispielsweise in einer der Bodenfläche eines Raumes entsprechenden Grösse oder in einer solchen Grösse, dass mehrere derartige Heizelemente nebeneinanderliegend in einem Raum einsatzfähig sind.

Das Heizelement liefert infolge seiner flächigen Durchströmung durch das Heizmedium eine gleichmässige Wärmeverteilung über seine gesamte Oberfläche. Durch die Ausgestaltung des Heizelementes lassen sich Heizelemente in Form von Platten mit einer Stärke von 10 bis 12 mm herstellen.

Im folgenden werden Ausführungsformen des Heizelementes an Hand der Zeichnung näher erläutert. Es zeigen:

Fig. 1 eine Teilschnittansicht einer ersten Ausführungsform des Heizelementes,

Fig. 2 eine Fig. 1 entsprechende Teilschnittansicht zur Erläuterung einer weiteren Ausführungsform des Heizelementes,

Fig. 3 eine schematische Darstellung des Heizelementes nach Fig. 1 zur Erläuterung des Aufbaus auf einem bestehenden Unterboden,

Fig. 4 eine Aufsicht auf die untere Bahn des Heizelementes entsprechend der Linie IV–IV in Fig. 1,

Fig. 5 eine Teilansicht des erfindungsgemässen Heizelementes zur Veranschaulichung seiner Seitenabschnitte,

Fig. 6 eine schematische Draufsicht auf ein plattenförmiges Heizelement, das den Boden eines Raumes bildet, zur Verdeutlichung der Strömungen des Heizmediums,

Fig. 7a und Fig. 7b Darstellungen zur Erläuterung einer weiteren Ausführungsform des Heizelementes,

Fig. 8 eine gegenüber Fig. 1 dargestellte abgewandelte Ausführungsform des Heizelements,

Fig. 9 eine gegenüber Fig. 8 weiter abgewandelte Ausführungsform des Heizelementes.

Im folgenden werden bevorzugte Ausführungsformen des plattenförmigen Heizelementes beschrieben.

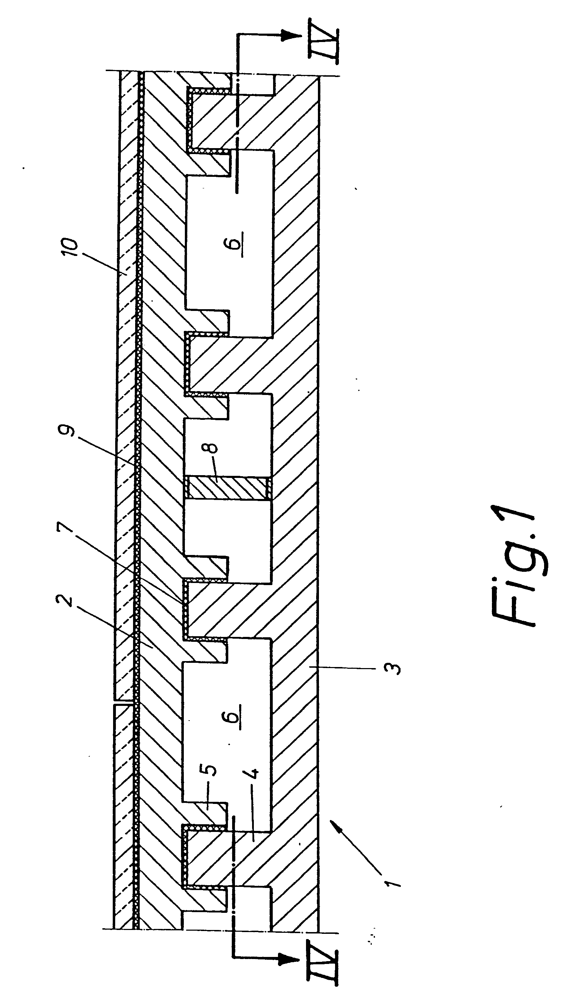

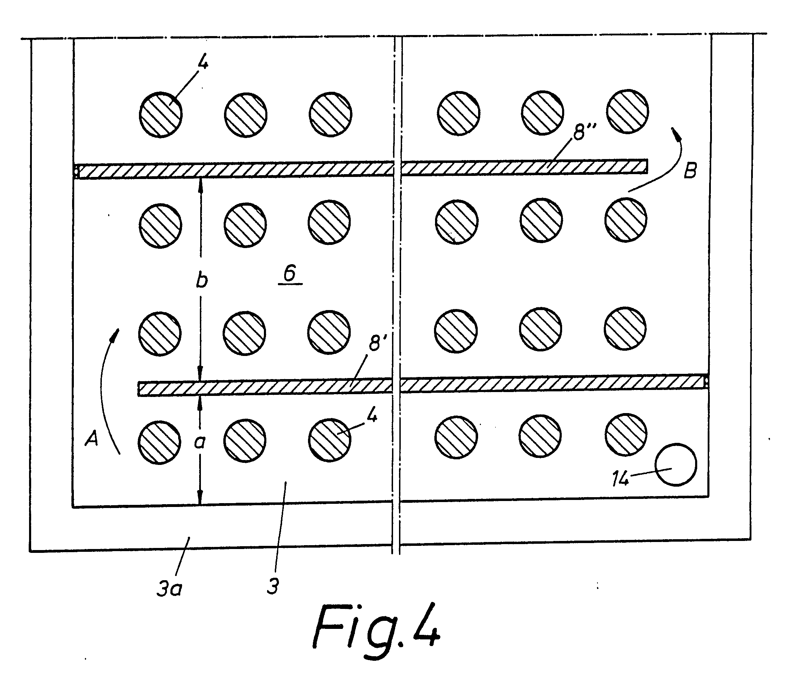

Nach Fig. 1 besteht das Heizelement aus einer oberen Platte 2 und einer unteren Platte 3 aus einem flexiblen Material. Vorzugsweise sind an der unteren Platte 3 etwa senkrecht zur Ebene der Platte 3 nach oben abstehende Abstandsstücke oder Noppen 4 ausgebildet, welche in dem betriebsfertigen Zustand des Heizelementes 1 nach Fig. 1 in etwa ringförmige und von der oberen Platte 2 nach unten abstehende Aufnahmeabschnitte 5 eingesetzt sind. Wie Fig. 4 zeigt, sind die Abstandsstücke 4 von zylindrischer Form und über die gesamte Fläche der Platte 3 verteilt angeordnet, wodurch zwischen der oberen und unteren Platte 2, 3 ein mit 6 angedeuteter Hohlraum geschaffen ist, durch den ein Heiz- oder Kühlmedium nach der Verlegung des erfindungsgemässen Heizelementes 1 fliessen kann. Die Platten 2, 3 werden vorzugsweise aus einem elastischen und flexiblen Material hergestellt, beispielsweise aus PVC oder Polyäthylen. Zur Verbindung der oberen und unteren Platte 2, 3 wird zwischen den Kontaktflächen der Abstandsstücke 4 und den Aufnahmeabschnitten 5 ein Klebstoff 7 aufgetragen, der die beiden Platten 2, 3 fest miteinander verbindet.

In dem mediumdurchflossenen Hohlraum 6 können in beliebiger und der Modulation entsprechenden Weise Leitblenden 8 eingesetzt sein, die eine bestimmte Strömungsrichtung des Heizmediums durch den definierten Hohlraum 6 hindurch bewirken, wie dies im folgenden noch beschrieben wird. Damit lässt sich z.B. ein mäanderförmiger Verlauf des Heizmediums konzipieren.

Auf die obere Platte 2 wird unter Einsatz einer Klebeschicht 9 eine Wärmeverteilungsschicht 10 aufgebracht, beispielsweise in Form von Aluminiumplatten, die eine Grösse von 300 × 300 mm und eine Stärke von 1 mm haben können. Durch die Schicht 10 wird eine gleichmässige Wärmeverteilung und Wärmeabstrahlung nach oben erreicht.

Entgegen der Darstellung nach Fig. 1 können die obere und untere Platte gegeneinander vertauscht sein, d.h. dass die obere Platte 2 die Abstandstücke 4 aufweist, während die untere Platte die Aufnahmeabschnitte 5 trägt.

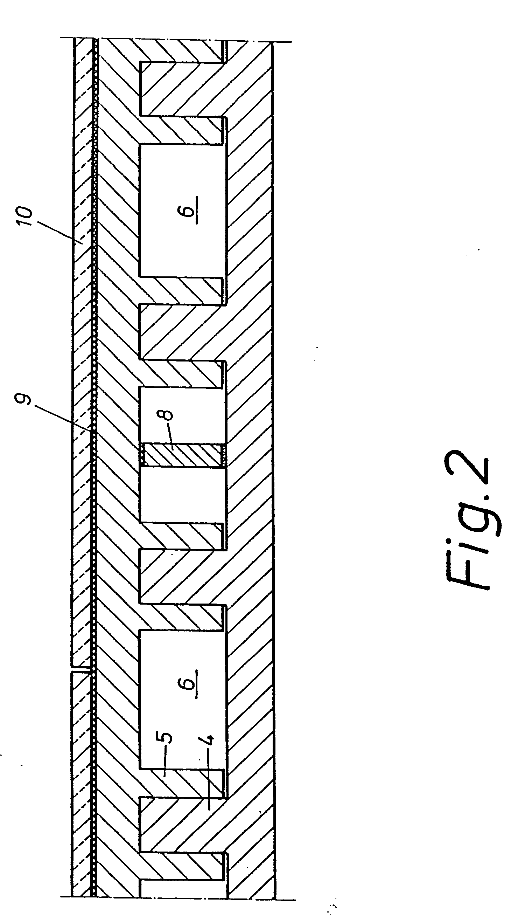

Eine weitere abgewandelte Ausführungsform zeigt Fig. 2. Hierbei sind die Aufnahmeabschnitte 5 verlängert und entsprechen etwa der Höhe der Abstandstücke 4. Bei einer derartigen Ausführung des Heizelements 1 kann auf die Klebeschicht 7 verzichtet werden, wenn die Toleranzen zwischen dem Innendurchmesser des Aufnahmeabschnitts 5 und dem Aussendurchmesser der zylindrischen Abstandstücke 4 derart klein gewählt ist, dass nach Herstellung der Verbindung zwischen der oberen und unteren Platte 2, 3 ein Pass- oder Presssitz zwischen den Aufnahmeabschnitten 5 und den jeweils zugeordneten Abstandstücken 4 gewährleistet ist. Sind grössere Toleranzen erwünscht und damit ein Passsitz oder Presssitz zwischen den Aufnahmeabschnitten 5 und den zugeordneten Abstandstücken 4 nicht möglich, wird entsprechend Fig. 1 eine Klebstoffschicht 7 zwischen den Abstandstücken 4 und den Innenflächen der Aufnahmeabschnitte 5 verwendet.

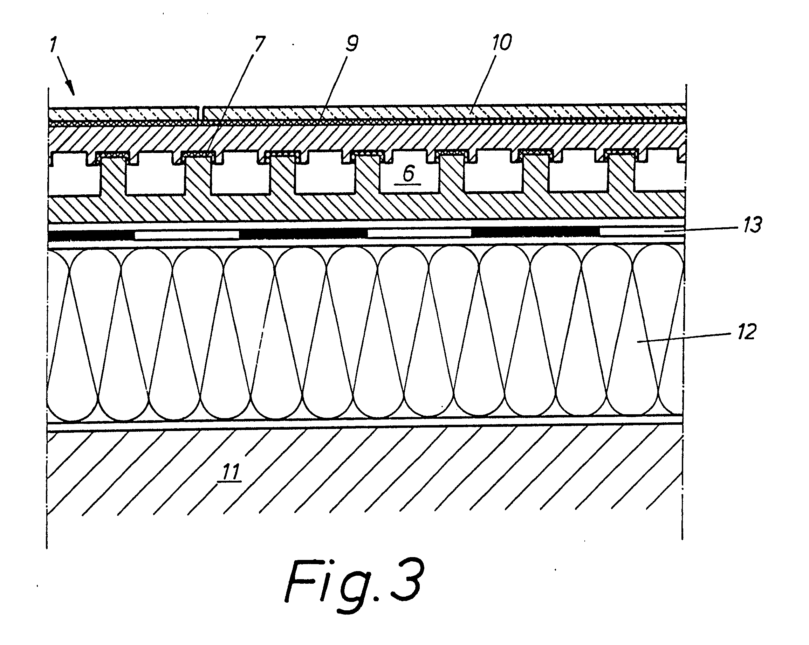

In Fig. 3 ist der Einsatz des erfindungsgemässen Heizelementes 1 auf einem bestehenden Unterboden 11 dargestellt. Wie bei herkömmlichen Fussbodenheizungen wird vor dem Aufbringen des Heizelementes 1 eine Isolierschicht 12, beispielsweise mit einer Stärke von 15 mm, auf den Unterboden 11 aufgelegt, wobei die Isolierschicht 12 aus Styropor oder dergleichen besteht. Auf die Isolierschicht 12 ist eine Kunststoff-Folie 13 aufgelegt; dann folgt das Heizelement 1.

Die Abstandstücke 4 haben vorzugsweise zylindrische Form und einen Aussendurchmesser von etwa 5 mm. Die Aufnahmeabschnitte 5, deren Höhe nach Fig. 1 und 3 kleiner als die Höhe der Abstandstücke 4 gewählt ist, haben bei der Ausführungsform nach Fig. 1 und 3 einen Innendurchmesser, der grösser oder, wenn entsprechend Fig. 2 ein Passsitz oder Presssitz zwischen den Abstandstücken 4 und den Aufnahmeabschnitten 5 erwünscht ist, der etwa gleich dem Aussendurchmesser der Abstandstücke 4 ist. Besonders vorteilhaft lässt sich das erfindungsgemässe Heizelement 1 verlegen, wenn die Gesamthöhe der beiden Platten 2, 3 unter Einschluss der Hohlräume 6 zwischen 7 und 9 mm liegt, wobei die Höhe der Hohlräume 6 etwa 3 bis 5 mm beträgt. Die Stärke der Platten 2, 3 liegt vorteilhafterweise in der Grössenordnung von etwa 2 mm.

Fig. 4 zeigt eine Aufsicht entsprechend der Linie IV–IV in Fig. 1 unter Einbeziehung des seitlichen Randes des Heizelementes 1, wobei allerdings nur der Rand 3a der unteren Platte veranschaulicht ist. Die Platten 2, 3 sind im Bereich ihrer Ränder fest miteinander verklebt. Bei Einsatz der Leitblenden 8 nach Fig. 1 und 2 lässt sich beispielsweise das in Fig. 4 gezeigte Strömungsschema erhalten. Unter der Annahme, dass die mit 14 bezeichnete Öffnung eine Öffnung zu einem Vorlauf darstellt, ergibt sich im Bereich des Pfeiles A eine freie Strömungsöffnung an der Stirnseite einer ersten Leitblende 8' und eine weitere freie Durchströmung im Bereich eines Pfeiles B an einer Stirnseite einer Leitblende 8''. Die Leitblenden 8' und 8'' können nach der Fertigstellung beispielsweise des in Fig. 1 gezeigten Heizelementes 1 in die Hohlkammer bzw. den Hohlraum 6 eingeschoben werden und damit entsprechend den Pfeilen A und B ein mäanderförmiges Strömungsschema durch das Heizelement 1 ermöglichen. An dem nicht dargestellten anderen Ende des Heizelementes 1 befindet sich ein Anschluss für den Rücklauf. Wie aus Fig. 4 ersichtlich ist, bewirken die Abstandstücke 4 eine Verteilung der Strömung innerhalb der Heizplatte, d.h. eine Strömung um die einzelnen Abstandstücke 4 herum, was eine gleichmässige Aufheizung der oberen Platte 2 über die gesamte Fläche gewährleistet. Gleichzeitig sind die Abstandstücke 4 die die obere Platte 2 tragenden bzw. abstützenden Teile des Heizelementes 1.

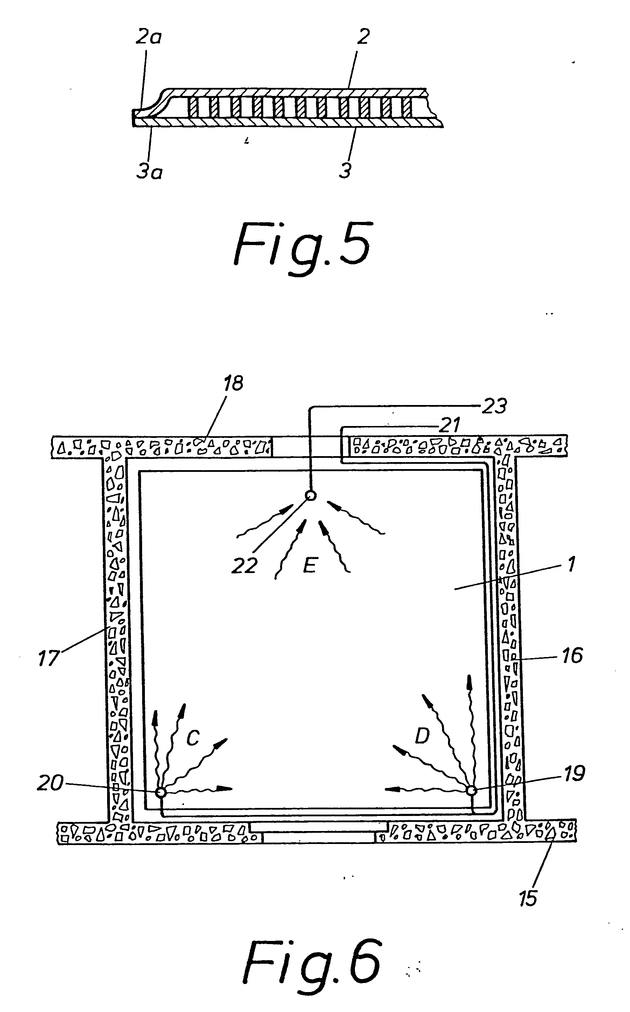

Fig. 5 zeigt eine schematische Schnittansicht entsprechend Fig. 1, wobei der Rand 2a und 3a der oberen Platte 2 und der unteren Platte 3 dargestellt sind. Die Randabschnitte 2a und 3a der beiden Platten 2, 3 liegen direkt aneinander an und sind fest miteinander verbunden, beispielsweise durch Klebstoff oder durch Verschweissen, und damit flüssigkeitsdicht. Wie Fig. 5 zeigt, ist der Rand 2a der oberen Platte 2 nach unten auf den Rand 3a der unteren Platte 3 abgebogen. Die Abstandstücke 4 halten jeweils in ihrer matrizenartigen Anordnung einen vorbestimmten Abstand zu den Seitenrändern 2a und 3a ein, was das Abbiegen beispielsweise des oberen Randes 2a ermöglicht.

Wenngleich nach Fig. 4 die Abstandstücke 4 in regelmässiger Ausbildung, d.h. in einer vorbestimmten Reihen- und Spaltenanordnung vorgesehen sind, kann auch eine davon abweichende, mehr oder weniger unsymmetrische Anordnung der Abstandstücke 4 erwünscht sein. Wesentlich ist, dass die Abstandstücke 4 und die zugehörigen Aufnahmeabschnitte 5 in einander zugeordneter Weise an der oberen und unteren Platte 2, 3 vorgesehen sind.

Das erfindungsgemässe Heizelement 1 wird vorzugsweise grössenmässig derart gestaltet, dass es in etwa den Bodenabmessungen, d.h. der Fläche eines zu beheizenden Raumes entspricht. Fig. 6 zeigt eine entsprechende Einsatzmöglichkeit des Heizelementes 1 in einem Raum eines Gebäudes. Mit 15 ist eine Aussenwand und mit 16, 17 und 18 sind Innenwände des Raumes bezeichnet. Die Anschlussmöglichkeiten des Heizelementes 1 sind mannigfaltig und Fig. 6 zeigt als Beispiel eine Möglichkeit. Das Heizelement 1 weist im Bereich der Aussenwand 15 zwei Anschlüsse 19, 20 zu einer Vorlaufleitung 21 und nahe der Innenwand 18 einen Anschluss 22 zu einer Rücklaufleitung 23 auf. Dadurch wird das Heizmedium, zum Beispiel Wasser, vom Vorlauf, d.h. mit seiner höchsten Temperatur, auf der Seite der Aussenwand 15 in das Heizelement eingeführt und an der zur Aussenwand 15 gegenüberliegenden Innenwand 18 nach Abkühlung infolge der Wärmeabgabe in den Rücklauf 23 zurückgeleitet. Die beiden Vorlaufanschlüsse 19, 20 gewährleisten ein gleichmässiges hohes Temperaturniveau auf der Oberseite des Heizelementes nahe der Aussenwand 15 gegenüber einem niedrigeren Temperaturniveau im Bereich des Anschlusses 22 nahe der Innenwand 18. Pfeile C und D zeigen die Strömungsrichtung des von den Anschlüssen 19, 20 ausströmenden Heizmediums und Pfeile E zeigen die Strömungsrichtung des Heizmediums in Richtung auf den Anschluss 22. Durch die Abstandstüke 4 wird eine weitgehend gleichmässige Durchströmung des Heizelementes 1 auch ohne Einsatz der Leitblenden 8 erhalten, so dass die Leitblenden 8 nur im Bedarfsfall Einsatz finden. Ersichtlicherweise ergeben die Abstandstücke 4, die im wesentlichen mit ihrer Achse senkrecht zur Strömungsebene des Heizmediums liegen, eine Verteilung der Strömungsrichtungen, da sie gewissermassen als «Prallflächen» wirken.

Abhängig von der Zahl der Aussenwände kann durch entsprechenden Einsatz von Leitblenden 8 abweichend von der Darstellung nach Fig. 6 jedes beliebige Strömungsschema konzipiert werden.

Die in Fig. 4 und 6 gezeigten Darstellungen sind nur als Beispiele einer grossen Zahl von Auslegungsmöglichkeiten zu werten. Weiterhin ist zu beachten, dass die Abstände a und b zwischen einer Leitblende 8' und dem Seitenrand sowie der Abstand b zwischen den einzelnen Leitblenden selbst beliebig gross gewählt werden kann, so dass die Breite der beispielsweise parallel zueinander liegenden und durch parallele Leitblenden gemäss Fig. 4 gebildeten Strömungskanäle beliebig gross und beliebig klein konzipierbar sind. Ein kleiner Abstand a bzw. b entspricht damit einem engen Einsatz von Leitblenden und ein grosser Abstand a, b dem Einsatz benachbarter Leitblenden, die vergleichbar grossen Abstand zueinander haben.

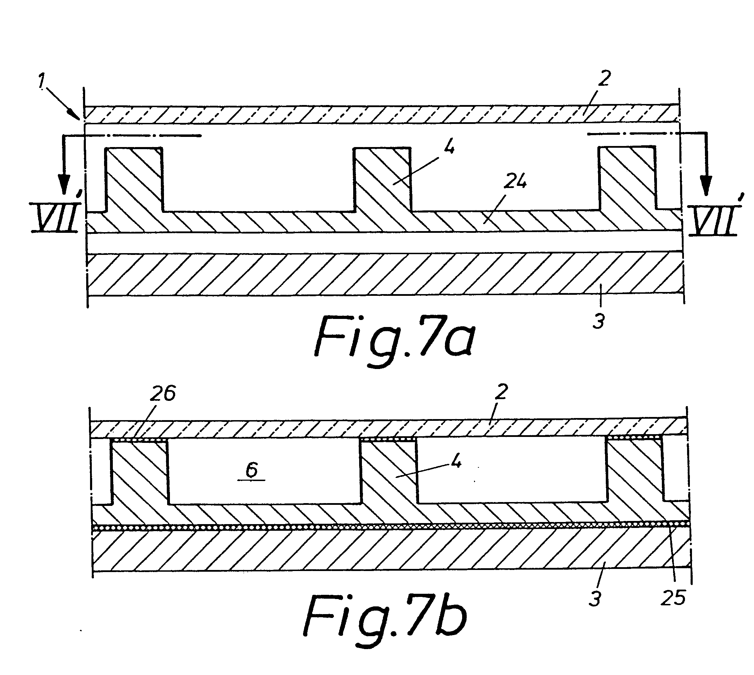

In Fig. 7 ist eine weitere Ausführungsform des erfindungsgemässen Heizelementes dargestellt. Nach Fig. 7a besteht das Heizelement 1 aus einer oberen Platte 2 und einer unteren Platte 3.

Aus Fig. 7a und Fig. 7b ist ersichtlich, dass erfindungsgemäss die obere Platte 2 nicht unbedingt Aufnahmeabschnitte 5 aufweisen muss, sondern an ihrer den Abstandstücken 4 zugewandten Fläche auch eben ausgebildet sein kann. Diese Möglichkeit lässt sich ersichtlicherweise auch bei dem Heizelement nach Fig. 1 vorsehen, während andererseits bei der Ausführungsform nach Fig. 7a und Fig. 7b die obere Platte 2 an ihrer den Abstandstücken 4 zugewandten Seite die ringförmigen Aufnahmeabschnitte 5 aufweisen kann.

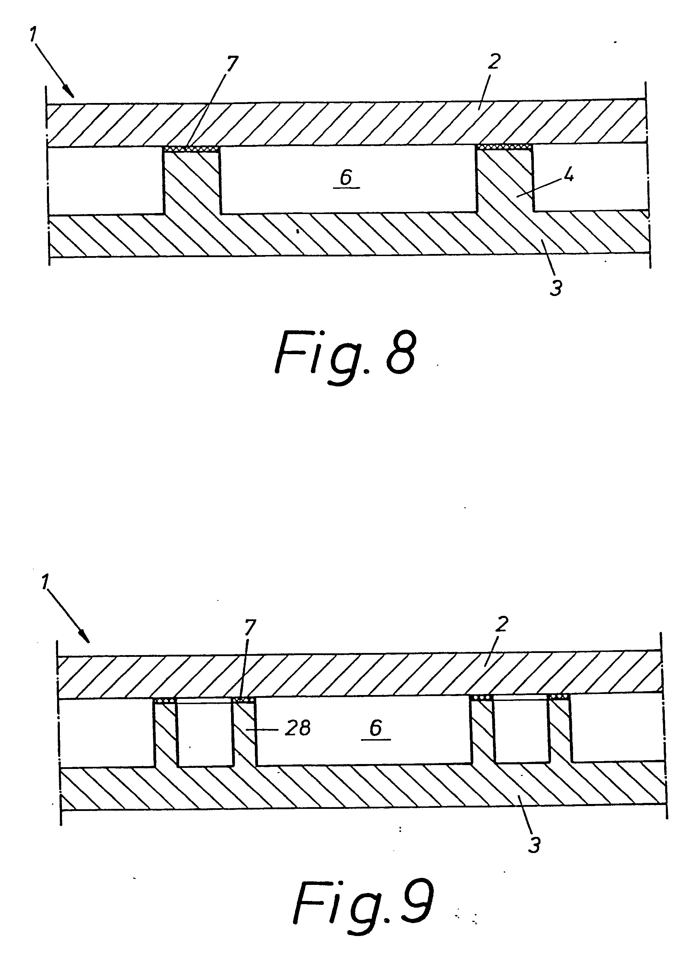

Fig. 8 zeigt eine Ausführungsform des Heizelements 1, bei dem die obere Platte 2 nicht mit den ringförmigen Aufnahmeabschnitten 5 versehen ist.

In Fig. 9 ist eine weitere Ausführungsform des Heizelements 1 dargestellt, bei der die obere Platte 2 entsprechend Fig. 8 ebenfalls keine ringförmigen Aufnahmeabschnitte 5 trägt, während die untere Platte 3 anstelle mit zylindrischen Abstandsstücken 4 mit ringförmigen Abstandsstücken 28 versehen ist. Die Ausführungsform nach Fig. 9 kann jedoch auch derart abgewandelt werden, dass entsprechend Fig. 1 oder Fig. 2 Aufnahmeabschnitte 5 mit gegenüber den Abstandsstücken 28 geringerer oder gleicher Höhe vorgesehen sind.

Die Platten 2 und 3 werden vorzugsweise aus Kunststoff, wie PVC oder Polyäthylen hergestellt. Es ist jedoch ohne weiteres möglich, die Platten 2, 3 aus einem anderen flexiblen Material mit oder ohne Einsatz von Metalleinlagen herzustellen, so dass die obere Platte 2 gleichzeitig als wärmeleitende und/oder Verschleisschicht dient.

Wesentlich ist, dass das gesamte Heizelement 1 eine relativ hohe Flexibilität hat und ähnlich wie Kunststoffbeläge in Räumen verlegt werden kann. Das erfindungsgemässe Heizelement wird im Werk vorkonfektioniert und entweder im Werk fertiggestellt oder an Ort und Stelle, d.h. an der Baustelle, fertiggestellt. In letzterem Fall können die Platten 2 und 3 getrennt transportiert werden und müssen an der Baustelle lediglich durch Verkleben miteinander verbunden werden.

Es sind noch weitere Änderungen möglich. Beispielsweise können anstelle der Abstandstücke 4 oder der Metallspiralen 30 Metallgewebe oder Metallfliesen Einsatz finden, die zwischen den zwei Platten 2, 3 eingesetzt und unter Hitzeeinwirkung auf die Platten 2, 3 in die Platten 2, 3 eingewalzt werden. Anstelle eines Metallgewebes lässt sich auch ein Kunststoffgewebe zwischen den Platten 2, 3 vorsehen, das einen Durchfluss des Heizmediums gestattet.

Gemäss der Erfindung ist vorgesehen, jedes Heizelement 1 in solcher Grösse zu fertigen, dass es nach Art eines Teppich- oder Fussbodenbelages auf dem Boden eines Raumes, vorzugsweise unter Einsatz der in Fig. 3 beschriebenen Isolierschicht, aufgelegt wird. Im Bedarfsfall und bei sehr grossen Raumflächen können jedoch auch mehrere derartige Heizelemente nebeneinander verlegt werden.

Das erfindungsgemässe Heizelement lässt sich bei Einsatz einer stabilen Befestigungsplatte auch als Decken- oder Wandheizung verwenden.

Sofern bei dem erfindungsgemässen Heizelement 1 die obere Platte 2 nicht direkt als Verschleisschicht dient, kann bei der Ausführungsform nach Fig. 1 und 2 auf die Wärmeverteilungsschicht 10 eine zusätzliche Verschleisschicht, beispielsweise in Form eines Bodenbelags wie eines Teppichbodens, oder dergleichen aufgebracht werden.

Wie vorstehende Darlegungen zeigen, kann die obere und untere Platte 2, 3 aus jedem beliebigen, flexiblen Material hergestellt werden, das jedoch flüssigkeitsdichte Eigenschaften hat, so dass das Heizmedium durch den zwischen den beiden Bahnen festgelegten Hohlraum von einem oder mehreren Anschlüssen von einer Vorlaufleitung zu einem oder mehreren Anschlüssen einer Rücklaufleitung fliesst. An den Randbereichen müssen die Platten 2, 3 fest und flüssigkeitsdicht miteinander verbunden sein.

Bei einer bevorzugten Ausführungsform besteht die obere und untere Platte aus einem flexiblen, elastischen Kunststoff und hat eine Stärke von 2 mm. Die Abstandstücke 4, die an der unteren Platte 3 ausgebildet sind, haben zylindrische Form mit einem Aussendurchmesser von 5 mm, während der Abstand der Achsen benachbarter Abstandstücke etwa 5 mm beträgt; ihre Höhe liegt zwischen 3 und 5 mm. Die aus Metall bestehende, auf die Platte 2 aufgeklebte Schicht 10 ist etwa 1 mm stark.

**Patentansprüche**

1. Plattenförmiges Heizelement, insbesondere zur Verlegung auf Böden, bestehend aus einer unteren Platte und einer oberen Platte, zwischen welchen Hohlräume zur Führung eines wärmeübertragenden Mediums festgelegt sind, bei dem die Platten (3, 2) aus flexiblem Material bestehen, dadurch gekennzeichnet, dass wenigstens eine der Platten (3, 2) zylindrische Abstandselemente (4, 5, 28, 30) aufweist, welche über diese Platte (3, 2) verteilt zur zugehörigen Platte gerichtet vorgesehen sind und den Hohlraum zur Führung des Mediums zwischen den beiden Platten festlegen, und dass die beiden Platten an ihrem Rand unter Freilassung von Eintritts- und Austrittsöffnungen (19, 20, 22) flüssigkeitsdicht miteinander verbunden sind.

2. Heizelement nach Anspruch 1, dadurch gekennzeichnet, dass ein einer der beiden Platten (3, 2) Aufnahmeabschnitte (5) vorgesehen sind, in welche die Abstandselemente (4) zumindest über einen Teil ihrer Höhe reichen.

3. Heizelement nach Anspruch 2, dadurch gekennzeichnet, dass die Abstandselemente (4) unter Pass- oder Presssitz in die Aufnahmeabschnitte (5) eingesetzt sind.

4. Heizelement nach einem der Ansprüche 1 bis 3, dadurch gekennzeichnet, dass die Abstandsstücke (4) im wesentlichen kreisringförmigen Querschnitt aufweisen.

5. Heizelement nach einem der Ansprüche 1 bis 4, dadurch gekennzeichnet, dass zwischen der oberen und unteren Platte (3, 2) Leitblenden (8) vorgesehen sind.

6. Heizelement nach einem der Ansprüche 1 bis 5, dadurch gekennzeichnet, dass auf der oberen Platte (2) eine Wärmeverteilungsschicht (10) vorgesehen ist.

7. Heizelement nach Anspruch 6, dadurch gekennzeichnet, dass die Wärmeverteilungsschicht (10) durch wenigstens eine Aluminiumplatte gebildet ist.

8. Heizelement nach Anspruch 6 oder 7, dadurch gekennzeichnet, dass auf der Wärmeverteilungsschicht (10) eine Verschleissschicht vorgesehen ist.

9. Heizelement nach einem der Ansprüche 1 bis 7, dadurch gekennzeichnet, dass die obere Platte (2) als Verschleissschicht dient.

10. Heizelement nach Anspruch 9, dadurch gekennzeichnet, dass die obere Platte (2) mit Metalleinlagen versehen ist.

11. Heizelement nach einem der Ansprüche 1 bis 10, dadurch gekennzeichnet, dass zwischen den Abstandsstücken (4) der einen Platte (3) und den anliegenden Flächen der anderen Platte (2) eine Klebstoffschicht (7) vorgesehen ist.

12. Heizelement nach Anspruch 8 oder 9, dadurch gekennzeichnet, dass die Verschleissschicht mehrschichtig aufgebaut ist und Metalleinlagen aufweist.

13. Heizelement nach Anspruch 1, dadurch gekennzeichnet, dass die obere und/oder untere Platte (2, 3) aus PVC oder Polyäthylen bestehen.

14. Heizelement nach einem der Ansprüche 1 bis 13, dadurch gekennzeichnet, dass seine Höhe etwa 10 bis 12 mm beträgt.

**Claims**

1. Panel-shaped heating element, particularly for laying on floors, consisting of a bottom plate and a top plate between which cavities are established for conveying a heat-transmitting medium, the plates (3, 2) consisting of flexible material, characterised in that at least one of the panels (3, 2) has cylindrical spacing elements (4, 5, 28, 30) which are distributed over this plate (3, 2) and are directed towards the associated plate, establishing the cavity between the two plates and through which the medium is conveyed and in that the two plates are at their edges connected to each other in liquid-tight fashion, inlet and outlet apertures (19, 20, 22) being left free.

2. Heating element according to Claim 1, characterised in that there are on one of the two plates (3, 2) housing portions (5) into which the spacing elements (4) extend to at least a part of their height.

3. Heating element according to Claim 2, characterised in that the spacing elements (4) are inserted into the housing portions (5) with a mating or pressed fit.

4. Heating element according to one of Claims 1 to 3, characterised in that the spacing elements (4) are of substantially circular cross-section.

5. Heating element according to one of Claims 1 to 4, characterised in that guide panel baffles (8) are disposed between the top and bottom plates (3, 2).

6. Heating element according to one of Claims 1 to 5, characterised in that a heat distributing layer (10) is provided on the top plate (2).

7. Heating element according to Claim 6, characterised in that the heat distributing layer (10) is constituted by at least one aluminium panel.

8. Heating element according to Claim 6 or 7, characterised in that a wearing layer is provided on the heat distributing layer (10).

9. Heating element according to one of Claims 1 to 7, characterised in that the top plate (2) serves as a wearing layer.

10. Heating element according to Claim 9, characterised in that the top plate (2) is provided with metal inlays.

11. Heating element according to one of Claims 1 to 10, characterised in that a layer of adhesive (7) is provided between the spacing elements (4) of one plate (3) and the contiguous faces of the other plate (2).

12. Heating element according to Claim 8 or 9, characterised in that the wearing layer is of multilayer construction and has metal inserts.

13. Heating element according to Claim 1, characterised in that the top and/or bottom plate (2, 3) consist(s) of PVC or polyethylene.

14. Heating element according to one of Claims 1 to 13, characterised in that its height is approximately 10 to 12 mm.

**Revendications**

1. Elément de chauffage en forme de plaque, notamment pour la pose sur des planchers, constitué d'une plaque inférieure et d'une plaque supérieure, entre lesquelles sont déterminés des espaces vides pour le quidage d'un fluide caloporteur, dans lequel les plaques (3, 2) sont constituées d'un matériau flexible, caractérisé en ce qu'au moins l'une des plaques (3, 2) comporte des éléments d'espacement (4, 5, 28, 30) qui sont prévus répartis sur cette plaque (3, 2) et dirigés vers la plaque associée et déterminent l'espace vide pour le guidage du fluide entre les deux plaques, et en ce que les deux plaques sont reliées entre elles sur leur bord, d'une manière étanche aux liquides, en laissant demeurer des ouvertures d'entrée et de sortie (19, 20, 22).

2. Elément de chauffage selon la revendication 1, caractérisé en ce qu'il est prévu sur l'une des deux plaques (3, 2) des tronçons de logement (5) dans lesquels s'étendent les éléments d'espacement (4) sur au moins une partie de leur hauteur.

3. Elément de chauffage selon la revendication 2, caractérisé en ce que les éléments d'espacement (4) sont logés dans les tronçons de logement (5) à ajustement étroit ou serré.

4. Elément de chauffage selon l'une des revendications 1 à 3, caractérisé en ce que les éléments d'espacement (4) présentent une section transversale essentiellement de forme annulaire circulaire.

5. Elément de chauffage selon l'une des revendications 1 à 4, caractérisé en ce que des panneaux directeurs (8) sont prévus entre les plaques supérieure et inférieure (3, 2).

6. Elément de chauffage selon l'une des revendications 1 à 5, caractérisé en ce qu'il est prévu sur la plaque supérieure (2) une couche de répartition de chaleur (10).

7. Elément de chauffage selon la revendication 6, caractérisé en ce que la couche de répartition de chaleur (10) est constituée par au moins une plaque d'aluminium.

8. Elément de chauffage selon la revendication 6 ou 7, caractérisé en ce qu'il est prévu sur la couche de répartition de chaleur (10) une couche d'usure.

9. Elément de chauffage selon l'une des revendications 1 à 7, caractérisé en ce que la plaque supérieure (2) sert de couche d'usure.

10. Elément de chauffage selon la revendication 9, caractérisé en ce que la plaque supérieure (2) est munie d'armatures métalliques.

11. Elément de chauffage selon l'une des revendications 1 à 10, caractérisé en ce qu'il est prévu une couche de colle (7) entre les éléments d'espacement (4) d'une plaque (3) et les surfaces adjacentes de l'autre plaque (2).

12. Elément de chauffage selon la revendication 8 ou 9, caractérisé en ce que la couche d'usure est réalisée à plusieurs couches et comporte des armatures métalliques.

13. Elément de chauffage selon la revendication 1, caractérisé en ce que les plaques supérieure et/ou inférieure (2, 3) sont constituées de PVC ou de polyéthylène.

14. Elément de chauffage selon l'une des revendications 1 à 13, caractérisé en ce que sa hauteur s'élève à environ 10 à 12 mm.

Fig.1

0 046 972

*Fig.2*

0 046 972

Fig.3

0 046 972

Fig.4

Fig.5

Fig.6

Fig.7a

Fig.7b

**Fig. 8**

**Fig. 9**